# EUROPEAN PATENT APPLICATION

(11) **EP 3 409 835 A1**
(43) Date of publication of application: **05.12.2018**
(21) Application number: 18185790.5
(22) Date of filing: 09.12.2013
(51) Int. Cl.: D21H 11/18, C08B 15/04, D21H 17/63, D21H 19/34, D21H 19/38, D21H 19/52, D21H 21/18, D21H 21/52

(54) **CELLULOSE-DERIVED COMPOSITIONS**

(30) Priority: 11.12.2012 GB 201222285
(62) Divisional of application: 13805491.1
(71) Applicant: FiberLean Technologies Limited, Par, Cornwall PL24 2SQ (GB)
(72) Inventor: HUSBAND, John Claude, St Austell PL25 5NX, Cornwall (GB); PHIPPS, Jonathan, Gorran Haven PL26 6JE, Cornwall (GB); HUGHES, Adrian, St. Austell PL25 5RG, Cornwall (GB); SVENDING, Per, S-442 31 Kungalv (SE); SKUSE, David Robert, Truro TR1 1BH, Cornwall (GB)
(74) Representative: EDP Patent Attorneys B.V.

(57) **Abstract**

A composition comprising microfibrillated cellulose and optionally inorganic particulate material, a process for making same, and a papermaking composition and paper product comprising said composition comprising microfibrillated cellulose and inorganic particulate material.

## Description

### TECHNICAL FIELD

The present invention relates to a composition comprising microfibrillated cellulose and optionally inorganic particulate material, a process for making same, and a papermaking composition and paper product comprising said composition comprising microfibrillated cellulose and inorganic particulate material.

### BACKGROUND OF THE INVENTION

Inorganic particulate materials, for example an alkaline earth metal carbonate (e.g. calcium carbonate) or kaolin, are used widely in a number of applications. These include the production of mineral containing compositions which may be used in paper manufacture or paper coating. In paper products such fillers are typically added to replace a portion of other more expensive components of the paper product. Fillers may also be added with an aim of modifying the physical, mechanical, and/or optical requirements of paper products. Clearly, the greater the amount of filler that can be included, the greater potential for cost savings. However, the amount of filler added and the associated cost saving must be balanced against the physical, mechanical and optical requirements of the final paper product. Thus, there is a continuing need for the development of fillers for paper which can be used at a high loading level without adversely effecting the physical, mechanical and/or optical requirements of paper products. There is also a need for the development of methods for preparing such fillers economically.

The present invention seeks to provide alternative and/or improved fillers for paper products which may be incorporated in the paper product at relatively high loading levels whilst maintaining or even improving the physical, mechanical and/or optical properties of the paper product. The present invention also seeks to provide an economical method for preparing such fillers.

Further, the present invention seeks to address the problem of preparing microfibrillated cellulose economically on an industrial scale. Current methods of microfibrillating cellulosic material require relatively high amounts of energy owing in part to the relatively high viscosity of the starting material and the microfibrillated product.

### SUMMARY OF THE INVENTION

In accordance with a first aspect of the present invention, there is provided a composition comprising microfibrillated cellulose and optionally inorganic particulate material, wherein said composition comprises: (i) no more than about 5.0 wt. % of cellulose fibrils having a fibril diameter of less than 10 nm, based on the total weight of cellulosic material in the composition, and/or (ii) no more than about 30 wt. % of cellulose fibrils having a fibril diameter of less than 100 nm, based on the total weight of cellulosic material in the composition. In certain embodiments, the composition comprises inorganic particulate material.

In accordance with a second aspect of the present invention, there is provided a papermaking composition comprising the composition according to the first aspect of the present invention.

In accordance with a third aspect of the present invention, there is provided a paper product, wherein the paper product (i) comprises the composition according to the first aspect of the present invention, or (ii) is obtained from the papermaking composition according to the second aspect of the present invention.

In accordance with a fourth aspect of the present invention, there is provided process for making a composition according to the first aspect of the present invention, comprising microfibrillating a fibrous substrate comprising cellulose in the presence of a grinding medium, and optionally in the presence of an inorganic particulate material, wherein the energy input during the microfibrillating process is between about 500 and 20,000 kWh per tonne of fibrous substrate comprising cellulose (kWh/t), for example, between about 1250 and 10,000 kWh/t or, for example, between about 1750 and 4000 kWh/t, to obtain a composition comprising microfibrillated cellulose and optionally inorganic particulate material, wherein said composition comprises: (i) no more than about 5.0 wt. % of cellulose fibrils having a fibril diameter of less than 10 nm, based on the total weight of cellulosic material in the composition, and/or (ii) no more than about 30 wt. % of cellulose fibrils having a fibril diameter of less than 100 nm, based on the total weight of cellulosic material in the composition.

### DETAILED DESCRIPTION OF THE INVENTION

### Composition comprising microfibrillated cellulose and optionally inorganic particulate material

The composition comprises: (i) no more than about 5.0 wt. % of cellulose fibrils having a fibril diameter of less than 10 nm, based on the total weight of the composition, and/or (ii) no more than about 30 wt. % of cellulose fibrils having a fibril diameter of less than 100 nm, based on the total weight of the composition. In certain embodiments, the composition comprises no more than about 4.5 wt. % of cellulose fibrils having a fibril diameter of less than 10 nm, for example, no more than about 4.0 wt. % of cellulose fibrils having a fibril diameter of less than 10 nm, or no more than about 3.8 wt. % of cellulose fibrils having a fibril diameter of less than 10 nm, or no more than about 3.6 wt. % of cellulose fibrils having a fibril diameter of less than 10 nm, or no more than about 3.4 wt. % of cellulose fibrils having a fibril diameter of less than 10 nm, or no more than about 3.2 wt. % of cellulose fibrils having a fibril diameter of less than 10 nm, or no more than about 3.0 wt. % of cellulose fibrils having a fibril diameter of less than 10 nm, or no more than about 2.8 wt. % of cellulose fibrils having a fibril diameter of less than 10 nm, or no more than about 2.6 wt. % of cellulose fibrils having a fibril diameter of less than 10 nm, or no more than about 2.4 wt. % of cellulose fibrils having a fibril diameter of less than 10 nm, or no more than about 2.2 wt. % of cellulose fibrils having a fibril diameter of less than 10 nm. In certain embodiments, the composition comprises no more than about 29 wt. % of cellulose fibrils having a fibril diameter of less than 100 nm, based on the total weight of the composition, for example, no more than about 28 wt. % of cellulose fibrils having a fibril diameter of less than 100 nm, or no more than about 27 wt. % of cellulose fibrils having a fibril diameter of less than 100 nm, or no more than about 26 wt. % of cellulose fibrils having a fibril diameter of less than 100 nm, or no more than about 25 wt. % of cellulose fibrils having a fibril diameter of less than 100 nm, or no more than about 24 wt. % of cellulose fibrils having a fibril diameter of less than 100 nm, or no more than about 23 wt. % of cellulose fibrils having a fibril diameter of less than 100 nm, or no more than about 22 wt. % of cellulose fibrils having a fibril diameter of less than 100 nm, or no more than about 21 wt. % of cellulose fibrils having a fibril diameter of less than 100 nm.

The fibril diameter of the cellulose fibrils, and the amount thereof, may be determined in accordance with the following method. The composition comprising microfibrillated cellulose and inorganic particulate material is diluted with distilled water and filtered through a Cyclopore (RTM) membrane, available from Whatman. The membrane is made of polycarbonate, having a 0.4 µm pore size and a diameter of 13 mm. The manufacturer Catalog Number is 7060-1304. The sample is retained on the membrane. A portion of this membrane is fixed to an aluminium pin stub having a 12.5 mm diameter. The stub is then placed into a Polaron SC7640 sputter coater and sputtered with gold for 90 seconds. The sample stub is analysed in a JEOL 6700F FESEM microscope at two magnifications. At least 20 images are recorded at 5000x and 150,000x magnification to allow quantification of the fibril diameter distribution. These images are then displayed in an image analysis software platform (NIS-Elements from Nikon) and the individual fibril diameters measured and recorded. No allowance is made for the sputtered gold coating on the fibres. The resultant number distribution is converted to a weight distribution by assuming that all fibrils were cylindrical and of equal length.

The fibril diameter d₅₀ is the median fibril diameter by weight.

In certain embodiments, the composition comprises: (i) no more than about 2.0 wt. % of cellulose fibrils having a fibril diameter of less than 10 nm, and/or (ii) no more than about 20 wt. % of cellulose fibrils having a fibril diameter of less than 100 nm. In certain embodiments, the composition comprises no more than about 1.9 wt. % of cellulose fibrils having a fibril diameter of less than 10 nm, for example, no more than about 1.8 wt. % of cellulose fibrils having a fibril diameter of less than 10 nm, or no more than about 1.7 wt. % of cellulose fibrils having a fibril diameter of less than 10 nm, or no more than about 1.6 wt. % of cellulose fibrils having a fibril diameter of less than 10 nm, or no more than about 1.5 wt. % of cellulose fibrils having a fibril diameter of less than 10 nm, or no more than about 1.4 wt. % of cellulose fibrils having a fibril diameter of less than 10 nm, or no more than about 1.3 wt. % of cellulose fibrils having a fibril diameter of less than 10 nm, or no more than about 1.2 wt. % of cellulose fibrils having a fibril diameter of less than 10 nm, or no more than about 1.1 wt. % of cellulose fibrils having a fibril diameter of less than 10 nm. In certain embodiments, the composition comprises no more than about 19 wt. % of cellulose fibrils having a fibril diameter of less than 100 nm, for example, no more than about 18 wt. % of cellulose fibrils having a fibril diameter of less than 100 nm, or no more than about 17 wt. % of cellulose fibrils having a fibril diameter of less than 100 nm, or no more than about 16 wt. % of cellulose fibrils having a fibril diameter of less than 100 nm.

In certain embodiments, the composition comprises: (i) no more than about 1.5 wt. % of cellulose fibrils having a fibril diameter of less than 10 nm, and/or (ii) no more than about 15 wt. % of cellulose fibrils having a fibril diameter of less than 100 nm. In certain embodiments, the composition comprise no more than about 1.4 wt. % of cellulose fibrils having a fibril diameter of less than 10 nm, for example, no more than about 1.3 wt. % of cellulose fibrils having a fibril diameter of less than 10 nm, or no more than about 1.2 wt. % of cellulose fibrils having a fibril diameter of less than 10 nm, or no more than about 1.1 wt. % of cellulose fibrils having a fibril diameter of less than 10 nm. In certain embodiments, the composition comprises no more than about 14 wt. % of cellulose fibrils having a fibril diameter of less than 100 nm, for example, no more than about 13 wt. % of cellulose fibrils having a fibril diameter of less than 100 nm, or no more than about 12 wt. % of cellulose fibrils having a fibril diameter of less than 100 nm, or no more than about 11 wt. % of cellulose fibrils having a fibril diameter of less than 100 nm, or no more than about 10 wt. % of cellulose fibrils having a fibril diameter of less than 100 nm

In certain embodiments, the composition comprises no more than about 1.0 wt. % of cellulose fibrils having a fibril diameter of less than 10 nm.

In certain embodiments, the composition comprises at least about 0.25 wt. % of cellulose fibrils having a fibril diameter of less than 10 nm, for example, at least about 0.50 wt. % of cellulose fibres having a fibril diameter of less than 10 nm, or at least about 0.75 wt. % of cellulose fibres having a fibril diameter of less than 10 nm. In certain embodiments, the composition comprises at least about 2.0 wt. % of cellulose fibrils having a fibril diameter of less than 100 nm, for example, at least about 5.0 wt. % of cellulose fibrils having a fibril diameter of less than 100 nm, or at least about 7.0 wt. %, or at least about 10 wt. %, or at least about 12 wt. % of cellulose fibrils having a fibril diameter of less than 100 nm.

In certain embodiments, the composition is substantially free of cellulose fibrils having a fibril diameter of less than 10 nm. By 'substantially free' is meant that the amount of cellulose fibrils having a fibril diameter of less than 10 nm is so small that the amount cannot be quantified using the measurement method described herein.

Based on the measured method described above, the cellulose fibrils may have a fibril diameter d₅₀ of from about 100 to 700 nm, based on the total weight of cellulosic material in the composition. In certain embodiments, the fibril diameter d₅₀ may be from about 120 to about 600 nm, for example, from about 140 to about 500 nm, or from about 160 to 450 nm, or from about 180 to about 400 nm, or from about 200 to about 350 nm, or from about 200 to about 300 nm, or from about 250 to about 300 nm.

### - source of cellulose

The microfibrillated cellulose may be derived from any suitable source, as described in detail below under 'Microfibrillation process'.

### - the inorganic particulate material

The inorganic particulate material may, for example, be an alkaline earth metal carbonate or sulphate, such as calcium carbonate, magnesium carbonate, dolomite, gypsum, a hydrous kandite clay such as kaolin, halloysite or ball clay, an anhydrous (calcined) kandite clay such as metakaolin or fully calcined kaolin, talc, mica, perlite or diatomaceous earth, or magnesium hydroxide, or aluminium trihydrate, or combinations thereof.

In certain embodiments, the inorganic particulate material comprises or is calcium carbonate. Hereafter, the invention may tend to be discussed in terms of calcium carbonate, and in relation to aspects where the calcium carbonate is processed and/or treated. The invention should not be construed as being limited to such embodiments.

The particulate calcium carbonate used in the present invention may be obtained from a natural source by grinding. Ground calcium carbonate (GCC) is typically obtained by crushing and then grinding a mineral source such as chalk, marble or limestone, which may be followed by a particle size classification step, in order to obtain a product having the desired degree of fineness. Other techniques such as bleaching, flotation and magnetic separation may also be used to obtain a product having the desired degree of fineness and/or colour. The particulate solid material may be ground autogenously, i.e. by attrition between the particles of the solid material themselves, or, alternatively, in the presence of a particulate grinding medium comprising particles of a different material from the calcium carbonate to be ground. These processes may be carried out with or without the presence of a dispersant and biocides, which may be added at any stage of the process.

Precipitated calcium carbonate (PCC) may be used as the source of particulate calcium carbonate in the present invention, and may be produced by any of the known methods available in the art. TAPPI Monograph Series No 30, "Paper Coating Pigments", pages 34-35 describes the three main commercial processes for preparing precipitated calcium carbonate which is suitable for use in preparing products for use in the paper industry, but may also be used in the practice of the present invention. In all three processes, a calcium carbonate feed material, such as limestone, is first calcined to produce quicklime, and the quicklime is then slaked in water to yield calcium hydroxide or milk of lime. In the first process, the milk of lime is directly carbonated with carbon dioxide gas. This process has the advantage that no by-product is formed, and it is relatively easy to control the properties and purity of the calcium carbonate product. In the second process the milk of lime is contacted with soda ash to produce, by double decomposition, a precipitate of calcium carbonate and a solution of sodium hydroxide. The sodium hydroxide may be substantially completely separated from the calcium carbonate if this process is used commercially. In the third main commercial process the milk of lime is first contacted with ammonium chloride to give a calcium chloride solution and ammonia gas. The calcium chloride solution is then contacted with soda ash to produce by double decomposition precipitated calcium carbonate and a solution of sodium chloride. The crystals can be produced in a variety of different shapes and sizes, depending on the specific reaction process that is used. The three main forms of PCC crystals are aragonite, rhombohedral and scalenohedral, all of which are suitable for use in the present invention, including mixtures thereof.

Wet grinding of calcium carbonate involves the formation of an aqueous suspension of the calcium carbonate which may then be ground, optionally in the presence of a suitable dispersing agent. Reference may be made to, for example, EP-A-614948 (the contents of which are incorporated by reference in their entirety) for more information regarding the wet grinding of calcium carbonate.

In some circumstances, minor additions of other minerals may be included, for example, one or more of kaolin, calcined kaolin, wollastonite, bauxite, talc or mica, could also be present.

When the inorganic particulate material is obtained from naturally occurring sources, it may be that some mineral impurities will contaminate the ground material. For example, naturally occurring calcium carbonate can be present in association with other minerals. Thus, in some embodiments, the inorganic particulate material includes an amount of impurities. In general, however, the inorganic particulate material used in the invention will contain less than about 5% by weight, preferably less than about 1% by weight, of other mineral impurities.

The inorganic particulate material may have a particle size distribution such that at least about 10% by weight, for example at least about 20% by weight, for example at least about 30% by weight, for example at least about 40% by weight, for example at least about 50% by weight, for example at least about 60% by weight, for example at least about 70% by weight, for example at least about 80% by weight, for example at least about 90% by weight, for example at least about 95% by weight, or for example about 100% of the particles have an e.s.d of less than 2µm.

In certain embodiments, at least about 50 % by weight of the particles have an e.s.d of less than 2 µm, for example, at least about 55 % by weight of the particles have an e.s.d of less than 2 µm, or at least about 60 % by weight of the particles have an e.s.d of less than 2 µm

Unless otherwise stated, particle size properties referred to herein for the inorganic particulate materials are as measured in a well known manner by sedimentation of the particulate material in a fully dispersed condition in an aqueous medium using a Sedigraph 5100 machine as supplied by Micromeritics Instruments Corporation, Norcross, Georgia, USA (web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (e.s.d), less than given e.s.d values. The mean particle size d₅₀ is the value determined in this way of the particle e.s.d at which there are 50% by weight of the particles which have an equivalent spherical diameter less than that d₅₀ value.

Alternatively, where stated, the particle size properties referred to herein for the inorganic particulate materials are as measured by the well known conventional method employed in the art of laser light scattering, using a Malvern Mastersizer S machine as supplied by Malvern Instruments Ltd (or by other methods which give essentially the same result). In the laser light scattering technique, the size of particles in powders, suspensions and emulsions may be measured using the diffraction of a laser beam, based on an application of Mie theory. Such a machine provides measurements and a plot of the cumulative percentage by volume of particles having a size, referred to in the art as the 'equivalent spherical diameter' (e.s.d), less than given e.s.d values. The mean particle size d₅₀ is the value determined in this way of the particle e.s.d at which there are 50% by volume of the particles which have an equivalent spherical diameter less than that d₅₀ value.

Thus, in another embodiment, the inorganic particulate material may have a particle size distribution, as measured by the well known conventional method employed in the art of laser light scattering, such that at least about 10% by volume, for example at least about 20% by volume, for example at least about 30% by volume, for example at least about 40% by volume, for example at least about 50% by volume, for example at least about 60% by volume, for example at least about 70% by volume, for example at least about 80% by volume, for example at least about 90% by volume, for example at least about 95% by volume, or for example about 100% by volume of the particles have an e.s.d of less than 2µm.

In certain embodiments, at least about 50 % by volume of the particles have an e.s.d of less than 2 µm, for example, at least about 55 % by volume of the particles have an e.s.d of less than 2 µm, or at least about 60 % by volume of the particles have an e.s.d of less than 2 µm

Details of the procedure that me be used to characterise the particle size distributions of mixtures of inorganic particle material and microfibrillated cellulose using the well known conventional method employed in the art of laser light scattering are provided below.

Another preferred inorganic particulate material for use in the method according to the first aspect of the present invention is kaolin clay. Hereafter, this section of the specification may tend to be discussed in terms of kaolin, and in relation to aspects where the kaolin is processed and/or treated. The invention should not be construed as being limited to such embodiments. Thus, in some embodiments, kaolin is used in an unprocessed form.

Kaolin clay used in this invention may be a processed material derived from a natural source, namely raw natural kaolin clay mineral. The processed kaolin clay may typically contain at least about 50% by weight kaolinite. For example, most commercially processed kaolin clays contain greater than about 75% by weight kaolinite and may contain greater than about 90%, in some cases greater than about 95% by weight of kaolinite.

Kaolin clay used in the present invention may be prepared from the raw natural kaolin clay mineral by one or more other processes which are well known to those skilled in the art, for example by known refining or beneficiation steps.

For example, the clay mineral may be bleached with a reductive bleaching agent, such as sodium hydrosulfite. If sodium hydrosulfite is used, the bleached clay mineral may optionally be dewatered, and optionally washed and again optionally dewatered, after the sodium hydrosulfite bleaching step.

The clay mineral may be treated to remove impurities, e. g. by flocculation, flotation, or magnetic separation techniques well known in the art. Alternatively the clay mineral used in the first aspect of the invention may be untreated in the form of a solid or as an aqueous suspension.

The process for preparing the particulate kaolin clay used in the present invention may also include one or more comminution steps, e.g., grinding or milling. Light comminution of a coarse kaolin is used to give suitable delamination thereof. The comminution may be carried out by use of beads or granules of a plastic (e. g. nylon), sand or ceramic grinding or milling aid. The coarse kaolin may be refined to remove impurities and improve physical properties using well known procedures. The kaolin clay may be treated by a known particle size classification procedure, e.g., screening and centrifuging (or both), to obtain particles having a desired d₅₀ value or particle size distribution.

The relative amounts of inorganic particulate material and cellulosic material, including microfibrillated cellulose, in the composition may vary in a ratio of from about 99.5:0.5 to about 0.5:99.5, based on the dry weight of inorganic particulate material and cellulosic material, for example, a ratio of from about 99.5:0.5 to about 50:50 based on the dry weight of inorganic particulate material and cellulosic material. For example, the ratio of the amount of inorganic particulate material and cellulosic material may be from about 99.5:0.5 to about 70:30. In certain embodiments, the ratio of inorganic particulate material to cellulosic material is about 80:20, or for example, about 85:15, or about 90:10, or about 91:9, or about 92:8, or about 93:7, or about 94:6, or about 95:5, or about 96:4, or about 97:3, or about 98:2, or about 99:1.

In certain embodiments, the composition of the first aspect of the present invention is in the form of an aqueous suspension, slurry or sediment.

In certain embodiment, the composition of the first aspect of the present invention may comprise up to about 80 % by weight water, for example, up to about 75 % water, or up to about 70 %, or up to about 65 % by weight water, or up to about 60 % by weight water, or up to about 55 % by weight water, or up to about 50 % by weight water, or up to about 45 % by weight water, or up to about 40 % by weight water, or up to about 35 % by weight water, or up to about 30 % by weight water, or up to about 25 % by weight water.

In certain embodiments, the composition comprises from about 50 to about 70 % by weight water, for example, from about 55 to about 65 % by weight water, or from about 60 to about 70 % by weight water, or from about 60 to about 65 % by weight water, or from about 65 to about 70 % by weight water.

In certain embodiments, the composition of the present invention may have a Brookfield viscosity (at 10 rpm) of from about 500 to 12,000 MPa.s, for example, from about 500 to about 10,000 MPa.s, or from about 1000 to 10,000 MPa.s, or from about 2000 to 10,000 MPa.s, or from about 3000 to 10,000 MPa.s, or from about 4000 to 10,000 MPa.s, or from about 5000 to 10,000 MPa.s, or from about 6000 to 10,000 MPa.s, or from about 6500 to 10,000 MPa.s, or from about 7000 to 10,000 MPa.s, or from about 7000 to 9,500 MPa.s or from about 8000 to 10,000 MPa.s, or from about 8000 to 9500 MPa.s, or from about 8000 to 9,000 MPa.s.

Brookfield viscosity is determined in accordance with the following procedure. A sample of the composition, e.g., the grinder product is diluted with sufficient water to give a fibre content of 1.5 wt. %. The diluted sample is then mixed well and its viscosity measured using a Brookfield R.V. viscometer (spindle No 4) at 10 rpm. The reading is taken after 15 seconds to allow the sample to stabilise.

The composition may comprise other optional additives including, but not limited to, dispersant, biocide, suspending aids, salt(s) and other additives, for example, starch or carboxy methyl cellulose or polymers, which may facilitate the interaction of mineral particles and fibres.

### Microfibrillation process

In certain embodiments, the composition comprising microfibrillated cellulose is obtainable by a process comprising microfibrillating a fibrous substrate comprising cellulose in the presence of a grinding medium.

In certain embodiments, the composition comprises microfibrillated cellulose and inorganic particulate material and the composition is obtainable by a process comprising microfibrillating a fibrous substrate comprising cellulose in the presence of said inorganic particulate material and a grinding medium.

The total energy input during the microfibrillating process is between about 500 and 20,000 kWh per tonne (kWh/t) of dry fibre in the fibrous substrate comprising cellulose, for example, between about 1000 and 15,000 kWh/t, or between about 1250 and 10,000 kWh/t, or between about 1250 and 7500 kWh/t, or between about 1250 and 5000 kWh/t, or between about 1250 and 4000 kWh/t, or between about 1500 and 3500 kWh/t, or between about 1750 and 3000 kWh/t, or between about 2000 and 2750 kWh/t, or between about 2250 and 2750 kWh/t, or between about 2300 and 2700 kWh/t, or between about 2400 and 2600 kWh/t, or between about 2450 and 2550 of dry fibre in the fibrous substrate comprising cellulose.

By "microfibrillating" is meant a process in which microfibrils of cellulose are liberated or partially liberated as individual species or as small aggregates as compared to the fibres of the pre-microfibrillated pup. Typical cellulose fibres (i.e., pre-microfibrillated pulp) suitable for use in papermaking include larger aggregates of hundreds or thousands of individual cellulose fibrils. By microfibrillating the cellulose, particular characteristics and properties, including the characteristics and properties described herein, are imparted to the microfibrillated cellulose and the compositions comprising the microfibrillated cellulose. Advantageously, the present inventors have surprisingly found that a balance between total energy input (including cost and environmental considerations) and a microfibrillated product having useful physical and mechanical properties may be achieved. That is to say, whilst previous investigations may have indicated compositions having a relatively high content (e.g., at least 40 wt. %) of cellulose fibrils having a very small fibril diameter (e.g., less than 10 nm) are desirable, the present inventors have found that it is possible to obtain microfibrillated species having useful properties but with relatively lower amounts of cellulose fibrils having a very small fibril diameter and without necessarily having to process the pulp starting material at energy inputs which are cost and environmentally prohibitive.

In certain embodiments, the composition comprising microfibrillated cellulose and optionally inorganic particulate material comprises no more than about 1.5 wt. % of cellulose fibrils having a fibril diameter of less than 10 nm and no more than about 15 wt. % of cellulose fibrils having a fibril diameter of less than 100 nm, and is obtainable by a process as described above in which the total energy during the microfibrillating process is between about 2300 and 2700 kWh/t of dry fibre in the fibrous substrate comprising cellulose, for example, between about 2400 and 2600 kWh/t of dry fibre in the fibrous substrate comprising cellulose, or between about 2450 and 2550 kWh/t of dry fibre in the fibrous substrate comprising cellulose.

The microfibrillating is carried out in the presence of grinding medium which acts to promote microfibrillation of the pre-microfibrillated cellulose. In addition, when present, the inorganic particulate material may act as a microfibrillating agent, i.e., the cellulose starting material can be microfibrillated at relatively lower energy input when it is co-processed, e.g., co-ground, in the presence of an inorganic particulate material.

The fibrous substrate comprising cellulose may be derived from any suitable source, such as wood, grasses (e.g., sugarcane, bamboo) or rags (e.g., textile waste, cotton, hemp or flax). The fibrous substrate comprising cellulose may be in the form of a pulp (i.e., a suspension of cellulose fibres in water), which may be prepared by any suitable chemical or mechanical treatment, or combination thereof. For example, the pulp may be a chemical pulp, or a chemithermomechanical pulp, or a mechanical pulp, or a recycled pulp, or a papermill broke, or a papermill waste stream, or waste from a papermill, or a combination thereof. The cellulose pulp may be beaten (for example in a Valley beater) and/or otherwise refined (for example, processing in a conical or plate refiner) to any predetermined freeness, reported in the art as Canadian standard freeness (CSF) in cm³. CSF means a value for the freeness or drainage rate of pulp measured by the rate that a suspension of pulp may be drained. For example, the cellulose pulp may have a Canadian standard freeness of about 10 cm³ or greater prior to being microfibrillated. The cellulose pulp may have a CSF of about 700 cm³ or less, for example, equal to or less than about 650 cm³, or equal to or less than about 600 cm³, or equal to or less than about 550 cm³, or equal to or less than about 500 cm³, or equal to or less than about 450 cm³, or equal to or less than about 400 cm³, or equal to or less than about 350 cm³, or equal to or less than about 300 cm³, or equal to or less than about 250 cm³, or equal to or less than about 200 cm³, or equal to or less than about 150 cm³, or equal to or less than about 100 cm³, or equal to or less than about 50 cm³. The cellulose pulp may then be dewatered by methods well known in the art, for example, the pulp may be filtered through a screen in order to obtain a wet sheet comprising at least about 10% solids, for example at least about 15% solids, or at least about 20% solids, or at least about 30% solids, or at least about 40% solids. The pulp may be utilised in an unrefined state, that is to say without being beaten or dewatered, or otherwise refined.

The fibrous substrate comprising cellulose may be added to a grinding vessel in a dry state. For example, a dry paper broke may be added directly to the grinder vessel. The aqueous environment in the grinder vessel will then facilitate the formation of a pulp.

The step of microfibrillating may be carried out in any suitable apparatus, including but not limited to a refiner. In one embodiment, the microfibrillating step is conducted in a grinding vessel under wet-grinding conditions. In another embodiment, the microfibrillating step is carried out in a homogenizer.

### • wet-grinding

The grinding is an attrition grinding process in the presence of a particulate grinding medium. By grinding medium is meant a medium other than the inorganic particulate material which is co-ground with the fibrous substrate comprising cellulose. It will be understood that the grinding medium is removed after the completion of grinding.

In certain embodiments, the microfibrillating process, e.g., grinding, is carried out in the absence of grindable inorganic particulate material.

The particulate grinding medium may be of a natural or a synthetic material. The grinding medium may, for example, comprise balls, beads or pellets of any hard mineral, ceramic or metallic material. Such materials may include, for example, alumina, zirconia, zirconium silicate, aluminium silicate, mullite, or the mullite-rich material which is produced by calcining kaolinitic clay at a temperature in the range of from about 1300ºC to about 1800ºC.

In certain embodiment, the particulate grinding medium comprises particles having an average diameter in the range of from about 0.1 mm to about 6.0mm and, more preferably, in the range of from about 0.2 mm to about 4.0mm. The grinding medium (or media) may be present in an amount up to about 70% by volume of the charge. The grinding media may be present in amount of at least about 10% by volume of the charge, for example, at least about 20 % by volume of the charge, or at least about 30% by volume of the charge, or at least about 40 % by volume of the charge, or at least about 50% by volume of the charge, or at least about 60 % by volume of the charge. In certain embodiments, the grinding medium is present in an amount from about 30 to about 70 % by volume of the charged, for example, from about 40 to about 60 % by volume of the charge, for example, from about 45 to about 55 % by volume of the charge.

By 'charge' is meant the composition which is the feed fed to the grinder vessel. The charge includes water, grinding media, fibrous substrate comprising cellulose and inorganic particulate material, and any other optional additives as described herein.

In certain embodiments, the grinding medium is a media comprising particles having an average diameter in the range of from about 0.5 mm to about 6 mm, for example, from about 1 mm to about 6 mm, or about 1 mm, or about 2 mm, or about 3 mm, or about 4 mm, or about 5 mm.

The grinding media may have a specific gravity of at least about 2.5, for example, at least about 3, or at least about 3.5, or at least about 4.0, or at least about 4.5, or least about 5.0, or at least about 5.5, or at least about 6.0.

In certain embodiments, the grinding media comprises particles having an average diameter in the range of from about 1 mm to about 6 mm and has a specific gravity of at least about 2.5.

In certain embodiments, the grinding media comprises particles having an average diameter of about 3 mm.

In one embodiment, the mean particle size (d₅₀) of the inorganic particulate material is reduced during the co-grinding process. For example, the d₅₀ of the inorganic particulate material may be reduced by at least about 10% (as measured by the well known conventional method employed in the art of laser light scattering, using a Malvern Mastersizer S machine), for example, the d₅₀ of the inorganic particulate material may be reduced by at least about 20%, or reduced by at least about 30%, or reduced by at least about 50%, or reduced by at least about 50%, or reduced by at least about 60%, or reduced by at least about 70%, or reduced by at least about 80%, or reduced by at least about 90%. For example, an inorganic particulate material having a d₅₀ of 2.5 µm prior to co-grinding and a d₅₀ of 1.5 µm post co-grinding will have been subject to a 40% reduction in particle size. In certain embodiments, the mean particle size of the inorganic particulate material is not significantly reduced during the co-grinding process. By 'not significantly reduced' is meant that the d₅₀ of the inorganic particulate material is reduced by less than about 10%, for example, the d₅₀ of the inorganic particulate material is reduced by less than about 5% during the co-grinding process.

The grinding may be performed in a vertical mill or a horizontal mill.

In certain embodiments, the grinding is performed in a grinding vessel, such as a tumbling mill (e.g., rod, ball and autogenous), a stirred mill (e.g., SAM or IsaMill), a tower mill, a stirred media detritor (SMD), or a grinding vessel comprising rotating parallel grinding plates between which the feed to be ground is fed.

In one embodiment, the grinding vessel is a vertical mill, for example, a stirred mill, or a stirred media detritor, or a tower mill.

The vertical mill may comprise a screen above one or more grind zones. In an embodiment, a screen is located adjacent to a quiescent zone and/or a classifier. The screen may be sized to separate grinding media from the product aqueous suspension comprising microfibrillated cellulose and inorganic particulate material and to enhance grinding media sedimentation.

In another embodiment, the grinding is performed in a screened grinder, for example, a stirred media detritor. The screened grinder may comprise one or more screen(s) sized to separate grinding media from the product aqueous suspension comprising microfibrillated cellulose and inorganic particulate material.

In certain embodiments, the fibrous substrate comprising cellulose and inorganic particulate material are present in the aqueous environment at an initial solids content of at least about 4 wt %, of which at least about 2 % by weight is fibrous substrate comprising cellulose. The initial solids content may be at least about 10 wt%, or at least about 20 wt %, or at least about 30 wt %, or at least about at least 40 wt %. At least about 5 % by weight of the initial solids content may be fibrous substrate comprising cellulose, for example, at least about 10 %, or at least about 15 %, or at least about 20 % by weight of the initial solids content may be fibrous substrate comprising cellulose. Generally, the relative amounts of fibrous substrate comprising cellulose and inorganic particulate material are selected in order to obtain a composition comprising microfibrillated cellulose and inorganic particulate according to the first aspect of the invention.

The grinding process may include a pre-grinding step in which coarse inorganic particulate is ground in a grinder vessel to a predetermined particle size distribution, after which fibrous material comprising cellulose is combined with the pre-ground inorganic particulate material and the grinding continued in the same or different grinding vessel until the desired level of microfibrillation has been obtained.

As the suspension of material to be ground may be of a relatively high viscosity, a suitable dispersing agent may be added to the suspension prior to or during grinding. The dispersing agent may be, for example, a water soluble condensed phosphate, polysilicic acid or a salt thereof, or a polyelectrolyte, for example a water soluble salt of a poly(acrylic acid) or of a poly(methacrylic acid) having a number average molecular weight not greater than 80,000. The amount of the dispersing agent used would generally be in the range of from 0.1 to 2.0% by weight, based on the weight of the dry inorganic particulate solid material. The suspension may suitably be ground at a temperature in the range of from 4°C to 100°C.

Other additives which may be included during the microfibrillation step include: carboxymethyl cellulose, amphoteric carboxymethyl cellulose, oxidising agents, 2,2,6,6-Tetramethylpiperidine-1-oxyl (TEMPO), TEMPO derivatives, and wood degrading enzymes.

In certain embodiments, the product of the co-grinding process is treated to remove at least a portion or substantially all of the water to form a partially dried or essentially completely dried product. For example, at least about 10 % by volume, for example, at least about 20% by volume, or at least about 30% by volume, or least about 40% by volume, or at least about 50% by volume, or at least about 60% by volume, or at least about 70% by volume or at least about 80 % by volume or at least about 90% by volume, or at least about 100% by volume of water in product of the co-grinding process may be removed. Any suitable technique can be used to remove water from the product including, for example, by gravity or vacuum-assisted drainage, with or without pressing, or by evaporation, or by filtration, or by a combination of these techniques. The partially dried or essentially completely dried product will comprise microfibrillated cellulose and inorganic particulate material and any other optional additives that may have been added prior to drying. The partially dried or essentially completely dried product may be stored or packaged for sale. The partially dried or essentially completely dried product may be optionally re-hydrated and incorporated in papermaking compositions and other paper products, as described herein.

### Paper products and processes for preparing same

The composition of the first aspect of the presence invention comprising microfibrillated cellulose and inorganic particulate material can be incorporated in papermaking compositions, which in turn can be used to prepare paper products. The term paper product, as used in connection with the present invention, should be understood to mean all forms of paper, including board such as, for example, white-lined board and linerboard, cardboard, paperboard, coated board, and the like. There are numerous types of paper, coated or uncoated, which may be made according to the present invention, including paper suitable for books, magazines, newspapers and the like, and office papers. The paper may be calendered or super calendered as appropriate; for example super calendered magazine paper for rotogravure and offset printing may be made according to the present methods. Paper suitable for light weight coating (LWC), medium weight coating (MWC) or machine finished pigmentisation (MFP) may also be made according to the present methods. Coated paper and board having barrier properties suitable for food packaging and the like may also be made according to the present methods.

In a typical papermaking process, a cellulose-containing pulp is prepared by any suitable chemical or mechanical treatment, or combination thereof, which are well known in the art. The pulp may be derived from any suitable source such as wood, grasses (e.g., sugarcane, bamboo) or rags (e.g., textile waste, cotton, hemp or flax). The pulp may be bleached in accordance with processes which are well known to those skilled in the art and those processes suitable for use in the present invention will be readily evident. The bleached cellulose pulp may be beaten, refined, or both, to a predetermined freeness (reported in the art as Canadian standard freeness (CSF) in cm³). A suitable paper stock is then prepared from the bleached and beaten pulp.

The papermaking composition of the present invention typically comprises, in addition to the composition comprising microfibrillated cellulose and inorganic particulate material, paper stock and other conventional additives known in the art. The papermaking composition of the present invention may comprise up to about 50% by weight inorganic particulate material derived from the composition comprising microfibrillated cellulose and inorganic particulate material based on the total dry contents of the papermaking composition. For example, the papermaking composition may comprise at least about 2% by weight, or at least about 5% by weight, or at least about 10% by weight, or at least about 15% by weight, or at least about 20% by weight, or at least about 25% by weight, or at least about 30% by weight, or at least about 35% by weight, or at least about 40% by weight, or at least about 45% by weight, or at least about 50% by weight, or at least about 60% by weight, or at least about 70% by weight, or at least about 80% by weight, or at least about 90 % by weight of inorganic particulate material derived from the composition comprising microfibrillated cellulose and inorganic particulate material, based on the total dry contents of the papermaking composition. The papermaking composition may also contain a non-ionic, cationic or an anionic retention aid or microparticle retention system in an amount in the range from about 0.1 to 2% by weight, based on the dry weight of the aqueous suspension comprising microfibrillated cellulose and inorganic particulate material. It may also contain a sizing agent which may be, for example, a long chain alkylketene dimer, a wax emulsion or a succinic acid derivative. The composition may also contain dye and/or an optical brightening agent. The composition may also comprise dry and wet strength aids such as, for example, starch or epichlorhydrin copolymers.

Paper products according to the present invention may be made by a process comprising: (i) obtaining or preparing a fibrous substrate comprising cellulose in the form of a pulp suitable for making a paper product; (ii) preparing a papermaking composition from the pulp in step (i), the composition of this invention comprising microfibrillated cellulose and inorganic particulate material, and other optional additives (such as, for example, a retention aid, and other additives such as those described above); and (iii) forming a paper product from said papermaking composition. As noted above, the step of forming a pulp may take place in the grinder vessel by addition of the fibrous substrate comprising cellulose in a dry state, for example, in the form of a dry paper broke or waste, directly to the grinder vessel. The aqueous environment in the grinder vessel will then facilitate the formation of a pulp.

In one embodiment, an additional filler component (i.e., a filler component other than the inorganic particulate material which is co-ground with the fibrous substrate comprising cellulose) can be added to the papermaking composition prepared in step (ii). Exemplary filler components are PCC, GCC, kaolin, or mixtures thereof. Paper products made from such papermaking compositions may exhibit greater strength compared to paper products comprising only inorganic particulate material. Paper products made from such papermaking compositions may exhibit greater strength compared to a paper product in which inorganic particulate material and a fibrous substrate comprising cellulose are prepared (e.g., ground) separately and are admixed to form a paper making composition. Equally, paper products prepared from a papermaking composition according to the present invention may exhibit a strength which is comparable to paper products comprising less inorganic particulate material. In other words, paper products can be prepared from a paper making composition according to the present invention at higher filler loadings without loss of strength.

The steps in the formation of a final paper product from a papermaking composition are conventional and well know in the art and generally comprise the formation of paper sheets having a targeted basis weight, depending on the type of paper being made.

Paper products prepared using the composition of the present invention have surprisingly been found to exhibit improved physical and mechanical properties whilst at the same time enabling the inorganic particulate material to be incorporated at relatively high loading levels. Thus, improved papers can be prepared at relatively less cost. For example, products prepared from papermaking compositions comprising the composition of the first aspect of the present invention have been found to exhibit improved burst strength and tensile strength.

### Paper coating composition and coating process

The composition of the first aspect of the present invention can be used as a coating composition without the addition of further additives. However, optionally, a small amount of thickener such as carboxymethyl cellulose or alkali-swellable acrylic thickeners or associated thickeners may be added.

The coating composition according to the present invention may contain one or more optional additional components, if desired. Such additional components, where present, are suitably selected from known additives for paper coating compositions. Some of these optional additives may provide more than one function in the coating composition. Examples of known classes of optional additives are as follows:
(a) one or more additional pigments: the compositions described herein can be used as sole pigments in the paper coating compositions, or may be used in conjunction with one another or with other known pigments, such as, for example, calcium sulphate, satin white, and so-called 'plastic pigment'. When a mixture of pigments is used, the total pigment solids content is preferably present in the composition in an amount of at least about 75wt% of the total weight of the dry components of the coating composition;
(b) one or more binding or cobinding agents: for example, latex, which may, optionally, be carboxylated, including: a styrene-butadiene rubber latex; an acrylic polymer latex; a polyvinyl acetate latex; or a styrene acrylic copolymer latex, starch derivatives, sodium carboxymethyl cellulose, polyvinyl alcohol, and proteins;
(c) one or more cross linkers: for example, in levels of up to about 5% by weight; e.g., glyoxals, melamine formaldehyde resins, ammonium zirconium carbonates; one or more dry or wet pick improvement additives: e.g., in levels up to about 2% by weight, e.g., melamine resin, polyethylene emulsions, urea formaldehyde, melamine formaldehyde, polyamide, calcium stearate, styrene maleic anhydride and others; one or more dry or wet rub improvement and abrasion resistance additives: e.g., in levels up to about 2% by weight, e.g., glyoxal based resins, oxidised polyethylenes, melamine resins, urea formaldehyde, melamine formaldehyde, polyethylene wax, calcium stearate and others; one or more water resistance additives: e.g., in levels up to about 2% by weight, e.g., oxidised polyethylenes, ketone resin, anionic latex, polyurethane, SMA, glyoxal, melamine resin, urea formaldehyde, melamine formaldehyde, polyamide, glyoxals, stearates and other materials commercially available for this function;
(d) one or more water retention aids: for example, in levels up to about 2% by weight, e.g., sodium carboxymethyl cellulose, hydroxyethyl cellulose, PVOH (polyvinyl alcohol), starches, proteins, polyacrylates, gums, alginates, polyacrylamide bentonite and other commercially available products sold for such applications;
(e) one or more viscosity modifiers and/or thickeners: for example, in levels up to about 2% by weight; e.g., acrylic associative thickeners, polyacrylates, emulsion copolymers, dicyanamide, triols, polyoxyethylene ether, urea, sulphated castor oil, polyvinyl pyrrolidone, CMC (carboxymethyl celluloses, for example sodium carboxymethyl cellulose), sodium alginate, xanthan gum, sodium silicate, acrylic acid copolymers, HMC (hydroxymethyl celluloses), HEC (hydroxyethyl celluloses) and others;
(f) one or more lubricity/calendering aids: for example, in levels up to about 2% by weight, e.g., calcium stearate, ammonium stearate, zinc stearate, wax emulsions, waxes, alkyl ketene dimer, glycols; one or more gloss-ink hold-out additives: e.g., in levels up to about 2% by weight, e.g., oxidised polyethylenes, polyethylene emulsions, waxes, casein, guar gum, CMC, HMC, calcium stearate, ammonium stearate, sodium alginate and others;
(g) one or more dispersants: the dispersant is a chemical additive capable, when present in a sufficient amount, of acting on the particles of the particulate inorganic material to prevent or effectively restrict flocculation or agglomeration of the particles to a desired extent, according to normal processing requirements. The dispersant may be present in levels up to about 1% by weight, and includes, for example, polyelectrolytes such as polyacrylates and copolymers containing polyacrylate species, especially polyacrylate salts (e.g., sodium and aluminium optionally with a group II metal salt), sodium hexametaphosphates, non-ionic polyol, polyphosphoric acid, condensed sodium phosphate, non-ionic surfactants, alkanolamine and other reagents commonly used for this function. The dispersant may, for example, be selected from conventional dispersant materials commonly used in the processing and grinding of inorganic particulate materials. Such dispersants will be well recognised by those skilled in this art. They are generally water-soluble salts capable of supplying anionic species which in their effective amounts can adsorb on the surface of the inorganic particles and thereby inhibit aggregation of the particles. The unsolvated salts suitably include alkali metal cations such as sodium. Solvation may in some cases be assisted by making the aqueous suspension slightly alkaline. Examples of suitable dispersants include: water soluble condensed phosphates, e.g., polymetaphosphate salts [general form of the sodium salts: (NaPO₃)ₓ] such as tetrasodium metaphosphate or so-called "sodium hexametaphosphate" (Graham's salt); water-soluble salts of polysilicic acids; polyelectrolytes; salts of homopolymers or copolymers of acrylic acid or methacrylic acid, or salts of polymers of other derivatives of acrylic acid, suitably having a weight average molecular mass of less than about 20,000. Sodium hexametaphosphate and sodium polyacrylate, the latter suitably having a weight average molecular mass in the range of about 1,500 to about 10,000, are especially preferred;
(h) one or more antifoamers and defoamers: for example, in levels up to about 1% by weight, e.g., blends of surfactants, tributyl phosphate, fatty polyoxyethylene esters plus fatty alcohols, fatty acid soaps, silicone emulsions and other silicone containing compositions, waxes and inorganic particulates in mineral oil, blends of emulsified hydrocarbons and other compounds sold commercially to carry out this function;
(i) one or more optical brightening agents (OBA) and fluorescent whitening agents (FWA): for example, in levels up to about 1% by weight, e.g., stilbene derivatives;
(j) one or more dyes: for example, in levels up to about 0.5% by weight;
(k) one or more biocides/spoilage control agents: for example, in levels up to about 1% by weight, e.g., oxidizing biocides such as chlorine gas, chlorine dioxide gas, sodium hypochlorite, sodium hypobromite, hydrogen, peroxide, peracetic oxide, ammonium bromide/sodium hypochlorite, or non-oxidising biocides such as GLUT (Glutaraldehyde, CAS No 90045-36-6), ISO (CIT/MIT) (Isothiazolinone, CAS No 55956-84-9 & 96118-96-6), ISO (BIT/MIT) (Isothiazolinone), ISO (BIT) (Isothiazolinone, CAS No 2634-33-5), DBNPA, BNPD (Bronopol), NaOPP, CARBAMATE, THIONE (Dazomet),EDDM - dimethanol (O-formal), HT - Triazine (N-formal), THPS - tetrakis (O-formal), TMAD - diurea (N-formal), metaborate, sodium dodecylbenene sulphonate, thiocyanate, organosulphur, sodium benzoate and other compounds sold commercially for this function, e.g., the range of biocide polymers sold by Nalco;
(l) one or more levelling and evening aids: for example, in levels up to about 2% by weight, e.g., non-ionic polyol, polyethylene emulsions, fatty acid, esters and alcohol derivatives, alcohol/ethylene oxide, calcium stearate and other compounds sold commercially for this function;
(m) one or more grease and oil resistance additives: for example, in levels up to about 2% by weight, e.g., oxidised polyethylenes, latex, SMA (styrene maleic anhydride), polyamide, waxes, alginate, protein, CMC, and HMC.

Any of the above additives and additive types may be used alone or in admixture with each other and with other additives, if desired.

For all of the above additives, the percentages by weight quoted are based on the dry weight of inorganic particulate material (100%) present in the composition. Where the additive is present in a minimum amount, the minimum amount may be about 0.01% by weight based on the dry weight of pigment.

The coating process is carried out using standard techniques which are well known to the skilled person. The coating process may also involve calendaring or supercalendering the coated product.

Methods of coating paper and other sheet materials, and apparatus for performing the methods, are widely published and well known. Such known methods and apparatus may conveniently be used for preparing coated paper. For example, there is a review of such methods published in Pulp and Paper International, May 1994, page 18 et seq. Sheets may be coated on the sheet forming machine, i.e., "on-machine," or "off-machine" on a coater or coating machine. Use of high solids compositions is desirable in the coating method because it leaves less water to evaporate subsequently. However, as is well known in the art, the solids level should not be so high that high viscosity and leveling problems are introduced. The methods of coating may be performed using an apparatus comprising (i) an application for applying the coating composition to the material to be coated and (ii) a metering device for ensuring that a correct level of coating composition is applied. When an excess of coating composition is applied to the applicator, the metering device is downstream of it. Alternatively, the correct amount of coating composition may be applied to the applicator by the metering device, e.g., as a film press. At the points of coating application and metering, the paper web support ranges from a backing roll, e.g., via one or two applicators, to nothing (i.e., just tension). The time the coating is in contact with the paper before the excess is finally removed is the dwell time - and this may be short, long or variable.

The coating is usually added by a coating head at a coating station. According to the quality desired, paper grades are uncoated, single-coated, double-coated and even triple-coated. When providing more than one coat, the initial coat (precoat) may have a cheaper formulation and optionally coarser pigment in the coating composition. A coater that is applying coating on each side of the paper will have two or four coating heads, depending on the number of coating layers applied on each side. Most coating heads coat only one side at a time, but some roll coaters (e.g., film presses, gate rolls, and size presses) coat both sides in one pass.

Examples of known coaters which may be employed include, without limitation, air knife coaters, blade coaters, rod coaters, bar coaters, multi-head coaters, roll coaters, roll or blade coaters, cast coaters, laboratory coaters, gravure coaters, kisscoaters, liquid application systems, reverse roll coaters, curtain coaters, spray coaters and extrusion coaters.

Water may be added to the solids comprising the coating composition to give a concentration of solids which is preferably such that, when the composition is coated onto a sheet to a desired target coating weight, the composition has a rheology which is suitable to enable the composition to be coated with a pressure (i.e., a blade pressure) of between 1 and 1.5 bar.

Calendering is a well known process in which paper smoothness and gloss is improved and bulk is reduced by passing a coated paper sheet between calender nips or rollers one or more times. Usually, elastomer-coated rolls are employed to give pressing of high solids compositions. An elevated temperature may be applied. One or more (e.g., up to about 12, or sometimes higher) passes through the nips may be applied.

### EXAMPLES

A series of compositions were prepared by microfibrillating pulp in a lab scale grinder in the presence of inorganic particulate material and grinding media.

### - lab scale grinder

The grinder was a vertical mill comprising a cylindrical grinding vessel having an internal diameter of 14.5 cm and a vertical impeller shaft having a circular cross section and a diameter of 1.8 cm. The shaft was equipped with 4 impellers positioned in an X design. The impellers had a cylindrical cross section and a diameter of 1.8 cm. The impellers are 6.5 cm long measured from the centre of the vertical shaft to the impeller tip.

### - sample preparation

Water, ground calcium carbonate (having 60 wt.% <2um by sedigraph and at 67% solids), and northern bleached softwood kraft pulp (Botnia RM90 from MetsaBotnia, soaked and filtered to give a pad at about 25 % solids) were added to the grinder such that the final charge comprised ground calcium carbonate (41.3 g), water (522 g) and pulp (10.3 g), based on the dry weight of inorganic particulate material and fibre in the pulp. Grinding was performed at 1000 rpm and a media volume concentration of 50% using 3mm mullite grinding media. Samples were prepared at energy inputs over the range 500 - 20 000 kWh/t of fibre. At the end of each grind the product was separated from the media by use of a 2 mm screen.

### - handsheet preparation and Burst strength

Following separation of the grinding media, the composition comprising microfibrillated pulp and inorganic particulate material were tested as fillers in paper handsheets. A batch of bleached chemical pulp comprising 70 parts eucalyptus and 30 parts northern bleached softwood pulp was used which was beaten with a Valley beater to give a CSF of 520 cm³. After disintegration and dilution to 2 % thick stock, the fibre was diluted to 0.3 wt% consistency for sheet making. The filler slurry was added together with retention aid (Ciba, Percol 292, 0.02 wt.% on furnish). Handsheets were made to a basis weight of 80 gm⁻² using a British handsheet mold according to standard methods, e.g., TAPPI T205 or SCAN C 26:76 (M 5:76). Sheets were prepared at approximately 15 and 25 parts inorganic particulate loading and the burst value at 20 wt. % inorganic particulate loading interpolated from these data. The burst at 20% loaded was expressed as a percentage of the unfilled value. The Burst strength for each handsheet was measured using a Messemer Büchnel burst tester according to SCAN P 24.

A control handsheet was made in the same way, save that 20 parts of the ground calcium carbonate (having 60 wt.% <2um by sedigraph) was added instead of the filler slurry.

### - viscosity

Samples of grinder product were diluted with sufficient water to give a fibre content of 1.5 wt. %. The diluted samples were mixed well and their viscosity measured using a Brookfield R.V. viscometer (spindle No 4) at 10 rpm. For each sample the reading was taken after 15 seconds to allow it to stabilise.

### - water content of sediment

Samples of grinder product were placed in glass tubes (13 mm internal diameter, 13 ml volume) and centrifuged for 30 mins at 4000 rpm in an MSE Centaur 2 centrifuge (approximately 2500 G). After centrifuging the samples were all separated into a clear supernatant phase and a consolidated sediment. The supernatant phase was then drained off and the water content of the sediment was measured.

### - fibril diameter

The fibril diameter and fibril diameter d₅₀ was measured in accordance with the method described above.

Results are summarized in Table 1 below.

**Table 1.**

| Sample no. | Specific energy input (kWh/t) | Burst (% of unfilled at 20 wt. % filler loading) | Viscosity at 1.5 % fibre Brookfield 10 rpm (mPas) | Water content of sediment (wt. %of total) | Fibril diameter | | |
|---|---|---|---|---|---|---|---|
| | | | | | d₅₀ (nm) | wt.% < 100 nm | wt.% < 10nm |
| 1 | 1250 | 71 | 8000 | 66.2 | 600 | 8 | 1 |
| 2 | 2500 | 81 | 8500 | 67.2 | 280 | 14 | 1 |
| 3 | 20000 | 60 | 800 | 57.7 | 130 | 28 | 3.3 |

The control handsheet had a Burst strength of 38.

## Claims

1. A process for making a paper coating composition, comprising microfibrillating a fibrous substrate comprising cellulose and inorganic material in the presence of a grinding medium, to obtain a composition comprising microfibrillated cellulose, wherein said composition comprises: (i) no more than 2.0 wt. % of cellulose fibrils having a fibril diameter of less than 10 nm, based on the total weight of cellulosic material in the composition, and/or (ii) no more than 20 wt. % of cellulose fibrils having a fibril diameter of less than 100 nm, based on the total weight of cellulosic material in the composition.

2. The process according to claim 1, wherein the process further comprises the adding of a thickener, wherein the thickener is selected from the group comprising carboxymethyl cellulose, and alkali-swellable acrylic thickeners.

3. The process according to any one of the preceding claims, wherein the composition comprises one or more additives, wherein the additives are selected from the group comprising additional pigments, (co-)binding agents, cross linkers, (dry or wet) pick improvement additives, (dry or wet) rub improvement and abrasion resistance additives, water resistance additives, water retention aids, viscosity modifiers, viscosity thickeners, lubricity/calendering aids, gloss-ink hold-out additives, dispersants, antifoamers, defoamers, optical brightening agents, fluorescent whitening agents, dyes, biocides, spoilage control agents, levelling aids, evening aids, and grease and oil resistance additives.

4. The process according to any one of the preceding claims, wherein the grinding medium comprises particles having an average diameter in the range of from 0.1 mm to 6.0 mm.

5. The process according to any one of the preceding claims, wherein the grinding medium has a specific gravity of at least 2.5.

6. The process according to any one of the preceding claims, wherein the grinding medium is present in an amount of at least 10% by volume.

7. The process according to any of the preceding claims, wherein the grinding is performed in a grinding vessel selected from the group comprising a tumbling mill, a stirred mill, a tower mill, a stirred media detritor, a grinding vessel comprising rotating parallel grinding plates between which a feed to be ground is fed, a horizontal mill, and a vertical mill.

8. The process according to claim 7, wherein the grinding vessel is a vertical mill.

9. The process according to any one of the claims 6-7, wherein a charge is fed to the grinder vessel, wherein the charge comprises water, the grinding media, the fibrous substrate comprising cellulose and inorganic particulate material, and wherein the grinding medium is present in an amount up to 70% by volume of the charge.

10. The process according to any one of the preceding claims, wherein the process further comprises microfibrillating the fibrous substrate in the presence of the grinding medium and inorganic particulate material; and/or wherein the process further comprises grinding the fibrous substance in the presence of the grinding medium and the inorganic particulate material.

11. The process according to claim 10, wherein the process further comprises a pre-grinding step in which coarse inorganic particulate material is ground in a grinder vessel to a predetermined particle size distribution.

12. The process according to any one of preceding claims, wherein an energy input during the microfibrillating process is between 500 and 10,000 kWh per tonne of fibrous substrate comprising cellulose.
